# EUROPEAN PATENT APPLICATION

(11) **EP 4 779 133 A1**
(43) Date of publication of application: **22.07.2026**
(21) Application number: 25224163.3
(22) Date of filing: 16.12.2025
(51) Int. Cl.: F01P 5/04, B60K 11/04, F01P 11/06, F01P 11/12

(54) **TIMER-BASED FAN CLEANING SYSTEM FOR AGRICULTURAL VEHICLE**

(30) Priority: 06.01.2025 US 202519010518
(71) Applicant: CNH Industrial America LLC, New Holland, PA 17557 (US)
(72) Inventor: Eaby, Jonathan, New Holland, 17557 (US); Hanson, Kevin, New Holland, 17557 (US); Bordeau, Vincent, New Holland, 17557 (US)
(74) Representative: CNH Industrial IP Department

(57) **Abstract**

A cleaning system for a cooling unit of an agricultural vehicle. The cleaning system includes a fan configured to deliver air (i) in a forward direction for cooling the cooling unit, and (ii) in a reverse direction for removing debris from the cooling unit. A controller is configured to activate the fan to deliver air in the reverse direction after (i) a pre-determined time interval has elapsed, and (ii) the agricultural vehicle is being operated in a pre-determined condition.

## Description

### BACKGROUND OF THE INVENTION

### 1. Field of the Invention

The present invention relates to work vehicles or agricultural vehicles, such as combines or windrowers, and, more particularly, to a reversible fan for cooling a heatproducing component or system of the vehicle.

### 2. Description of the Related Art

As described in U.S. Patent App. No. 2015/0017901, U.S. Patent App. No. 2017/0096931 ('931 Publication), and U.S. Patent App. No. 18/218661, during operation of a work vehicle, a cooling fan of a cooling system of the vehicle may draw air through one or more radiators (also referred to as fluid coolers or coolers) to cool engine coolant and/or hydraulic fluid, especially when the work vehicle is operating in warm temperatures. Each of the above references is incorporated by reference herein in their entirety.

The cooling system may include a housing, and a plurality of cooling units arranged within the housing. Each cooling unit may include a screen, a fluid cooler (radiator) and a cooling fan. The screen may be at the inlet of the corresponding cooling unit, and the fan may be at the outlet of the corresponding cooling unit adjacent to the IC (internal combustion) engine. In regular operation, the cooling fan causes cool air to be drawn through the inlet, through the screen, across or through the fluid cooler, and exhausted through the outlet of the respective cooling unit.

Each screen functions as a coarse filter to filter out debris (dust, chaff, etc.) and limit such debris from entering the corresponding cooling unit. Particularly for vehicles used in dusty and/or dirty environments, such as on farms or construction sites, dirt and debris in the air near the radiators may be drawn onto the radiator fins by the cooling fan, necessitating cleaning to restore efficient function of the radiator.

The debris may be removed by reversing the rotational direction of the cooling fan, which causes the debris to be blown in the opposite direction towards the screen. The fan reversal can lead to a temporary increase in the engine/vehicle temperature due to the temporary slowing of the fan and/or the fan being operated in the reverse direction.

One option for managing the fan reversals is to reverse the fan during either low-load or no-load conditions, such as at a time when an agricultural vehicle is not processing crop material. However, reversing the fan during every low-load or no-load condition may lead to an unnecessary increase in the engine/vehicle temperature if the low-load or no-load conditions occur frequently. Alternatively, the frequent fan reversal may be perceived as a nuisance to the operator.

Another option for managing the fan reversals is to reverse the fan at a specific time interval (e.g., every 5 minutes). However, purely relying on a specific time interval may cause the fan to reverse at a high-load time where the vehicle generates the greatest heat load and requires active cooling to prevent overheating.

Described herein is a system that is configured to reverse the fan after a predetermined time period has elapsed and during a low-load or no-load condition.

It is noted that the teachings in this section are provided for the purpose of background information, and are not necessarily admitted prior art.

### SUMMARY OF THE INVENTION

According to one aspect of the invention, a cleaning system for a cooling unit of an agricultural vehicle is provided. The cleaning system includes a fan configured to deliver air (i) in a forward direction for cooling the cooling unit, and (ii) in a reverse direction for removing debris from the cooling unit. A controller is configured to activate the fan to deliver air in the reverse direction after (i) a pre-determined time interval has elapsed, and (ii) the agricultural vehicle is being operated in a predetermined condition.

### BRIEF DESCRIPTION OF THE DRAWING FIGURES

The above-mentioned and other features and advantages of this invention, and the manner of attaining them, will become more apparent and the invention will be better understood by reference to the following description of an embodiment of the invention taken in conjunction with the accompanying drawings, wherein:
FIG. 1 is a side view of an embodiment of an agricultural vehicle in the form of a combine, which includes an embodiment of a cooling system.
FIG. 2 is a side view of a portion of the internal components of the combine shown in FIG. 1, including the grain tank, IC engine and cooling system shown in FIG. 1.
FIG. 3 is a side view of the internal components shown in FIG. 2.
FIG. 4 depicts a schematic block diagram of a cleaning system for the cooling system of FIG. 2.
FIG. 5 depicts a flowchart illustrating a scheduled process for operating the cleaning system of FIG. 4, according to a first example.
FIG. 6 depicts a flowchart illustrating a scheduled process for operating the cleaning system of FIG. 4, according to a second example.

Corresponding reference characters indicate corresponding parts throughout the several views. The exemplification set out herein illustrates an embodiment of the invention, in one form, and such exemplification is not to be construed as limiting the scope of the invention in any manner.

### DETAILED DESCRIPTION OF THE INVENTION

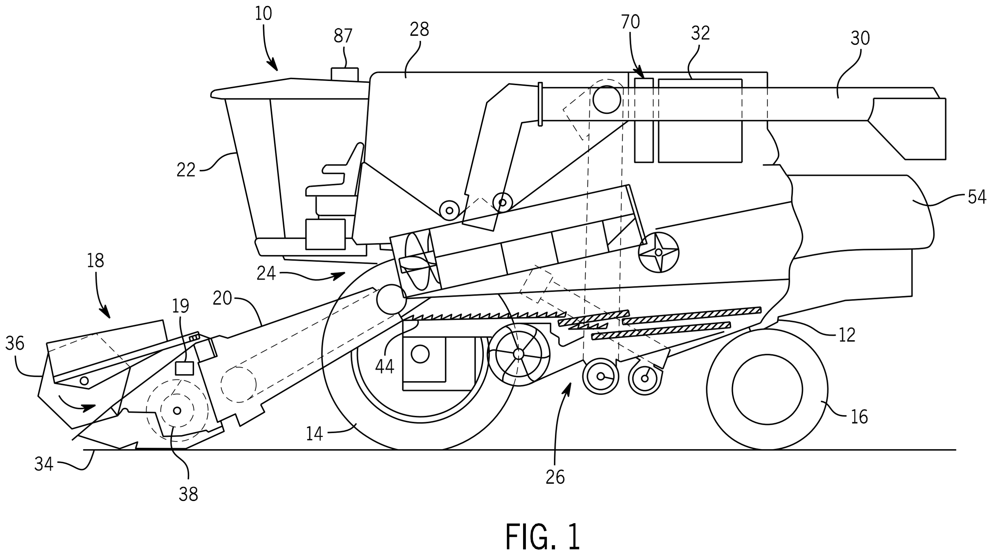

Referring now to the drawings, and more particularly to FIG. 1, there is shown an agricultural vehicle in the form of a combine harvester 10 ("combine 10"). At the outset it should be understood that the combine 10 is described for exemplary purposes, and the vehicle is not limited to a combine. The vehicle may be a windrower, mower, skid steer, tractor, seeder, cultivator, spreader, baler, plow, sprayer, etc. Such vehicles may have a high-load operating mode and a low-load operating mode. The low-load mode has a low load as compared to the high-load mode, and the high-load mode has a high load as compared with the low-load mode. The load may be a measure of the power required by the engine of the vehicle to support operations of the combine. The operations may include crop handling, driving, lifting, and/or any other operations associated with a combine, windrower, mower, skid steer, tractor, seeder, cultivator, spreader, baler, plow, sprayer, etc.

A combine, for example, may be in the high-load operating mode when a header of the combine is positioned on the ground surface and the combine is actively harvesting crop material on the ground surface. The combine may be in the low-load operating mode when the header of the combine is raised off of the ground surface and the combine is not actively harvesting crop material, such as during a headland or turnrow mode. During the high-load operating mode, the engine or other components of the vehicle are in the greatest need of active cooling. During the low-load operating mode, the engine or other components of the vehicle are not in the greatest need of active cooling.

Combine 10 generally includes a chassis 12, ground engaging wheels 14 and 16, header 18, feeder housing 20, operator cab 22, threshing and separating system 24, crop cleaning system 26, grain tank 28, and unloading auger 30. Motive force may be selectively applied to front wheels 14 through a power plant in the form of an internal combustion engine 32 and a transmission (not shown).

Header 18 is mounted to the front of combine 10 and includes a cutter bar 34 for severing crops from a field during forward motion of combine 10. Header 18 is configured to move from an operational position (shown) wherein the header is positioned adjacent to the ground surface and a raised position (not shown) wherein the header is positioned at a pre-determined distance above the ground. A header position sensor 19 is associated with the header 18 for detecting a vertical position of the header relative to the ground surface. The sensor 19 may be provided in the form of an optical sensor, a potentiometer that is connected to one of the actuators that adjusts the vertical position of the header, a proximity sensor, a pressure sensor, a ground contact that is configured to contact the ground surface, or any other sensor known in the art that is configured to detect the vertical position of the header 18.

In operation, a rotatable reel 36 of the header 18 feeds the crop into header 18, and a double auger 38 feeds the severed crop laterally inwardly from each side toward feeder housing 20. Feeder housing 20 conveys the cut crop to threshing and separating system 24. Further details in connection with the systems 24 and 26 are described in the '931 Publication.

Combine 10 includes a cooling system 70 for cooling at least one component onboard the combine 10. For example, the cooling system 70 can be used to cool the engine 32, exhaust and combustion gases associated with the engine 32, a hydraulic circuit (not shown), an air conditioning (A/C) circuit 87 associated with the operator cab 22, and/or other fluid carrying or heat producing components onboard the combine 10.

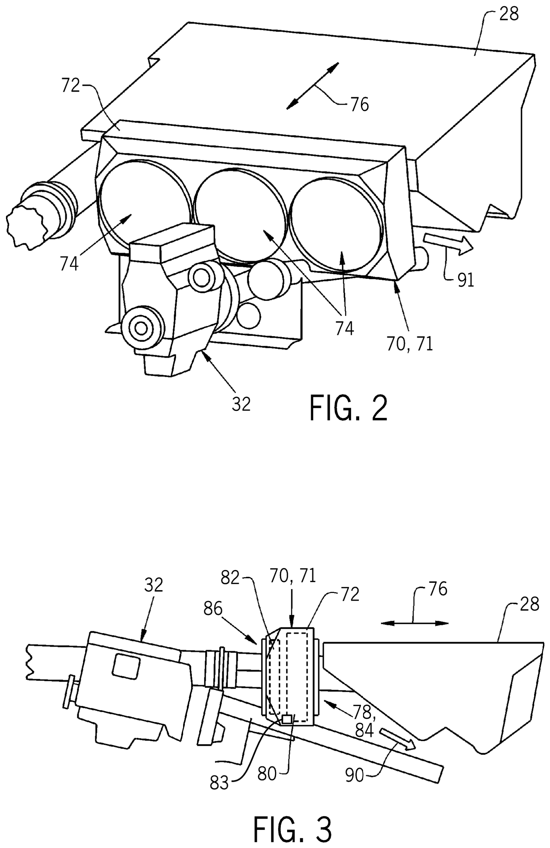

Turning now to FIGs. 2 and 3, the cooling system 70 is in the form of an integral cooling package 71 that is positioned adjacent the engine 32. The cooling package 71 includes a housing 72, and a plurality of cooling units 74 arranged in a side-to-side manner within the housing 72, transverse to a fore-aft direction 76 of the combine 10. It should be understood that the cooling system 70 may include any number of cooling units 74, and the cooling units 74 may be arranged in any manner within the housing 72, such as in a front-to-back manner within the housing, i.e., in the fore-aft longitudinal direction. Optionally, air pressure sensor(s) 83 may be positioned within housing 72 for sensing an air pressure within housing 72. A deviation in the air pressure might indicate a plug condition.

Each cooling unit 74 generally includes a screen 78, a fluid cooler 80 (e.g., radiator) and a fan 82. The screen 78 may be positioned at the inlet 84 of the corresponding cooling unit 74, and the fan 82 may be positioned at the outlet 86 of the corresponding cooling unit 74 adjacent to the engine 32. The inlet 84 allows air to be drawn into the respective cooling unit 74, and the outlet 86 allows air to be exhausted from the respective cooling unit 74.

Each fluid cooler 80 is configured for cooling a corresponding type of fluid, such as a cooling fluid for IC engine 32, hydraulic oil in a hydraulic power circuit, a refrigerant fluid used in an A/C circuit, etc. The fluid coolers can be configured with any combination of cooling circuits, and can all be the same, partially the same, or all different. In the event that one of more of the fluid coolers 80 are configured different relative to each other, then those cooling circuits are likely independent from each other. However, if multiple fluid coolers are configured the same, then those cooling circuits can be independent from each other or can be coupled together in series or parallel. In the illustrated embodiment, the three fluid coolers 80 are each assumed to be configured differently from each other and independent from each other. One fluid cooler 80 may be configured as a radiator for the IC engine 32, another fluid cooler 80 may be configured as an oil cooler for a hydraulic circuit, and the third fluid cooler 80 may be configured as a heat exchange coil for an A/C circuit 87 associated with the operator cab 22. The fluid coolers 80 can also be configured as other types of fluid coolers, such as an intercooler or an aftercooler.

Each screen 78 functions as a coarse filter to filter out dust, chaff, etc. from entering the corresponding cooling unit 74. Each screen 78 may be configured to rotate, or each screen 78 may be stationary and fixed to housing 72. Further details in connection with the screen 78 are provided in the '931 Publication.

Each cooling fan 82 is configured for moving air through the respective cooling unit 74 for effective liquid-to-air cooling. The rotational speed, blade pitch angle, etc., can vary depending on the particular needs of the cooling unit 74. The air flow on the outlet side of the cooling unit 74 can be used for cooling and/or cleaning an area onboard the combine 10. For example, air from the outlet 86 of the cooling unit 74 configured as a radiator can be used to both cool, clean and inhibit buildup of dirt and chaff on the IC engine 32.

One or more of the cooling fans 82 can also be configured for reversal of the airflow direction through the corresponding cooling unit 74. This can be accomplished using a reversible motor, or the blades can have a varying pitch to reverse the air flow direction. When the air is then flowing in the opposite direction, such that the inlet 84 is in fact the outlet of the cooling unit 74, then this flow of air can be used to clean the cooler 80 and the screen 78. Alternatively, the reverse flowing air can be used to clean and/or cool other parts of the combine 10. For example, referring to FIGS. 2 and 3, air flowing in a reverse direction 90 can be directed under the grain tank 28 toward the outer surface of the concaves for cleaning this area within the combine 10.

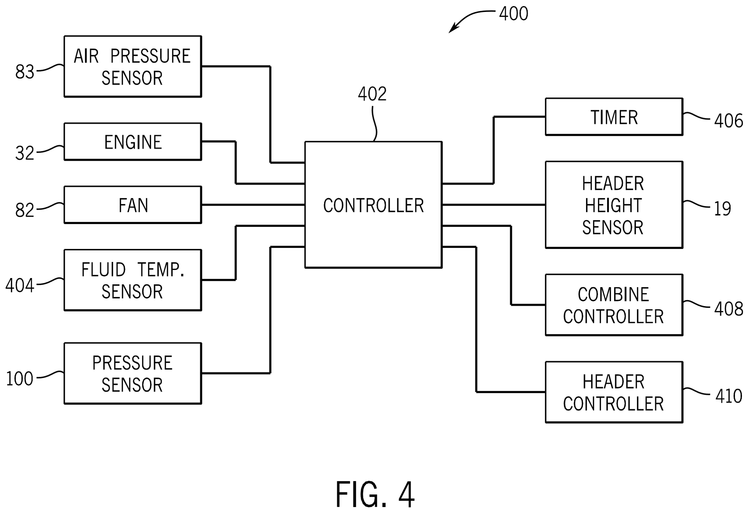

Turning now to FIG. 4 there is shown, in a schematic form, a block diagram of a control system 400 for cleaning one (or more) of the cooling units 70. The control system 400 may be referred to herein as a cleaning system. It should be understood that the cleaning system 400 may form part of the overall cooling system 70.

The control system 400 generally comprises a computerized controller 402 that is in electrical/data/signal communication with engine 32, cooling fan(s) 82, air pressure sensor(s) 83, a temperature sensor 404 for fluid cooler 80, a timer/clock 406, a header height/position sensor 19, a combine controller 408, and/or a header controller 410.

The engine 32 may transmit information to the controller 402 such as the load experienced by the engine 32. Temperature sensor 404 may transmit information to the controller 402, which information is indicative of the need for cooling the engine 32 (or other component/system being cooled). The combine controller 408 may transmit information such as the current or future state of the combine (such as time(s) when the header will be raised or lowered, or the time(s) when the systems 24/26 will be activated). The header controller 410 may also transmit information such as the current or future operational state of the header (e.g., when the crop processing components (e.g., reel) of the header will be activated/deactivated), and/or the current or future vertical position of the header. Controller 402 is configured to control fan 82 to deliver air in either a forward or reverse direction and at a specific fan speed through the data/signal connection. The speed of fan 82 may also be monitored by controller 402 through the data/signal connection. Specifically, the controller 402 may monitor the speed of fan 82 to determine whether a plug (e.g., significant accumulation of debris) exists within the cooling units 70. The controller 402 may also monitor the air pressure sensor(s) 83 to determine whether a plug exists within the cooling units 70.

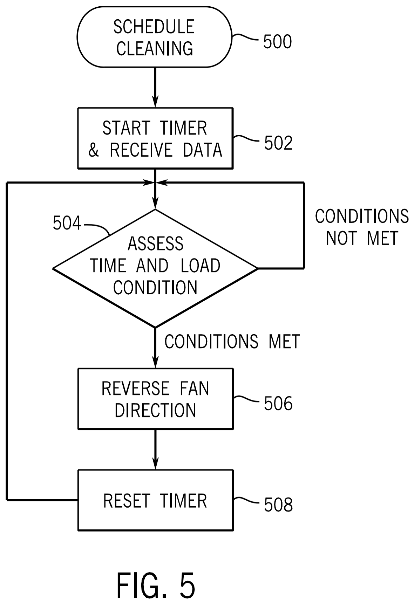

Turning now to FIG. 5, and according to a first exemplary method of using the control system 400, at step 500, an operator schedules a cleaning process for the cooling unit(s) 70. As part of step 500, the operator may select a time interval (e.g., 40 minutes) for the cleaning process. Alternatively, the timer interval may be a factory-set time period. Also, step 500 may be performed automatically by controller 402.

It should be understood at the outset that even though the user schedules the cleaning process at step 500, the physical cleaning process does not necessarily begin at step 500. It should also be understood that the "scheduled" cleaning is not actually scheduled to occur at a specific time, rather, as will be explained in greater detail hereinafter, two conditions must be met before the scheduled cleaning can commence.

At step 502, timer 406 resets and begins counting down. At the same time, the controller 402 receives (or continues to receive) input data/signals from one or more of the systems and components shown in FIG. 4.

At decision block 504, the controller 402 assesses whether the following two conditions are met: (i) the time interval since the last reverse activation of the fan 82 (i.e., the time interval set at step 500) has elapsed, and (ii) the vehicle is being operated in a low-load condition. If both conditions (i) and (ii) at decision block 504 are met, then the method proceeds to step 506. Alternatively, if either one of the conditions (i) or (ii) is not met at decision block 504, then the process returns to the input of the decision block 504.

Turning back to the second condition (ii) of the decision block 504 (i.e., the vehicle being operated in a low-load condition), this low-load condition may be satisfied when, for example, (i) the header 18 is raised off of the ground surface (as sensed by sensor 19), (ii) the vehicle is not actively harvesting crop material (as reported by controllers 408, 410 or sensed by sensors), (iii) the engine 32 is not operational or is being operated below a pre-determined load level, (iv) the engine 32 is not driving the wheels of the vehicle, and/or (v) an engine coolant temperature is below a predetermined value (as measured by sensor 404).

At step 506, the fan 82 is operated in a reverse direction (i.e., direction 90) for a predetermined amount of time in order to proactively clean the cooler 80 and the screen 78 and/or any other internal components of the cooling unit(s) 70.

At step 508, the timer 406 is reset, the fan 82 returns to normal operation (i.e., delivering air in the forward direction), and the process returns to decision block 504 assuming that the vehicle remains operational.

Described hereinafter are alternatives to the above-described process.

As an optional step, step 506 will not occur if the controller 402 determines that the vehicle is expected to switch from the low-load condition to a high-load condition during the pre-determined time that the fan will be operated in the reverse direction. As noted above, combine controller 408 may transmit information such as the future state of the combine (such as time(s) when the header will be raised or lowered, or the expected future time(s) when the systems 24/26 will be activated). Controller 402 will use that information to understand if the vehicle is expected to be operated in a high-load condition during the pre-determined time when the fan will be operated in the reverse direction. If this were to occur then the process would return to the input of decision block 504.

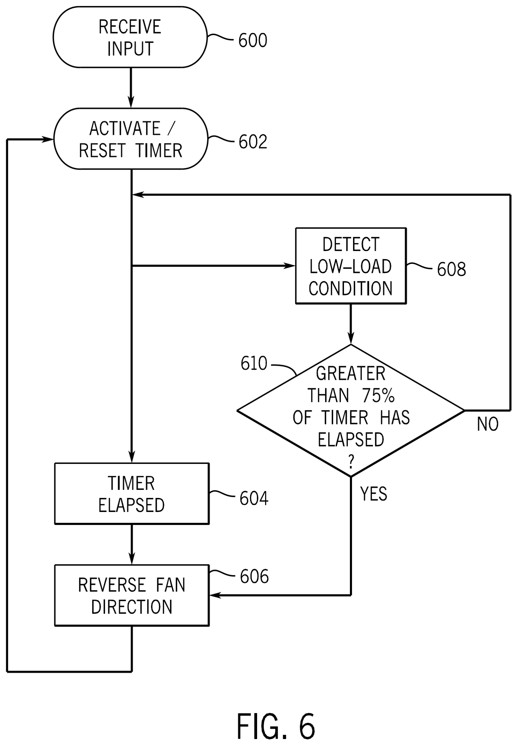

Turning now to FIG. 6, and according to a second exemplary method of using the control system 400, at step 600, an operator schedules a cleaning process for the cooling unit(s) 70, and the controller 402 receives that information as an input. As part of step 600, the operator may select a time interval (e.g., 40 minutes) for the cleaning process. Alternatively, the timer interval may be a factory-set time period. Also, step 600 may be performed automatically by controller 402.

At step 602, timer 406 is activated and begins counting down. The full length of that timer may be described herein as a "second pre-determined time interval." If no "low-load condition" is detected during the second pre-determined time interval, then the timer elapses at step 604.

The method then proceeds to step 606. At step 606, the fan 82 is operated in a reverse direction (i.e., direction 90) for a pre-determined amount of time in order to proactively clean the cooler 80 and the screen 78 and/or any other internal components of the cooling unit(s) 70. At this time, it is possible that the fan 82 is operated in a reverse direction while the vehicle is being operated in a high-load condition.

The exemplary method then returns to step 602, at which time the timer is reset and then activated to repeat the above-described process.

As an alternative to proceeding directly from step 602 to step 604, if a low-load condition of the vehicle is detected at step 608 before the timer has elapsed, the method proceeds to the decision block at step 610. It is noted that the requirements for the low-load conditions (e.g., raised header) were described above in connection with step 504.

At step 610, the controller 402 determines whether a predetermined timer percentage (for example, 65%, 75%, 80%, 85%, etc.) of the timer has elapsed. The aforementioned predetermined timer percentage may also be referred to herein as a "pre-determined time interval." If the aforementioned predetermined timer percentage has elapsed, then the method proceeds directly to the above-described step 606. If the predetermined timer percentage has not elapsed, then the method does not proceed to step 606 until (i) the full timer (i.e., the second pre-determined time interval) has actually elapsed or (ii) another low-load condition is detected (at which time decision block 610 is repeated).

Although not part of the scheduled cleaning process shown in FIGs. 5 and 6, it should be understood that, at all times, the controller 402 may receive information/signals from the air pressure sensor 83 and/or the pressure sensor 100, and, if the controller 402 determines that a plug condition exists based upon that information, then the controller 402 may cause the fan 82 to deliver air in the reverse direction (i.e., direction 90) to clean the cooler 80 and the screen 78 and/or any other internal components of the cooling unit(s) 70 in order to address an urgent plug condition. This process may be referred to as an unscheduled cleaning process.

If the system 400 includes multiple fans 82 that are responsible for cooling separate cooling units 70, then each fan 82 may be operated independently according to the exemplary methods of using the control system described in FIGs. 5 and 6. Thus, a first fan 82 may be operated in a forward direction to cool one component of the vehicle associated with the first fan 82, whereas a second fan 82 may be operated in a reverse direction to clean the cooler 80 and the screen 78 that are associated with the second fan 82.

It is to be understood that the operational steps described above are performed by the controller 402 upon loading and executing software code or instructions which are tangibly stored on a tangible computer readable medium, such as on a magnetic medium, e.g., a computer hard drive, an optical medium, e.g., an optical disc, solidstate memory, e.g., flash memory, or other storage media known in the art. Thus, any of the functionality performed by the controller 402 described herein is implemented in software code or instructions which are tangibly stored on a tangible computer readable medium. Upon loading and executing such software code or instructions by the controller 402, the controller 402 may perform any of the functionality of the controller 402 described herein, including any steps of the methods described herein.

The term "software code" or "code" used herein refers to any instructions or set of instructions that influence the operation of a computer or controller. They may exist in a computer-executable form, such as machine code, which is the set of instructions and data directly executed by a computer's central processing unit or by a controller, a human-understandable form, such as source code, which may be compiled in order to be executed by a computer's central processing unit or by a controller, or an intermediate form, such as object code, which is produced by a compiler. As used herein, the term "software code" or "code" also includes any human-understandable computer instructions or set of instructions, e.g., a script, that may be executed on the fly with the aid of an interpreter executed by a computer's central processing unit or by a controller.

The present disclosure describes a number of inventive features and/or combinations of features that may be used alone or in combination with each other or in combination with other technologies. The embodiments described herein are all exemplary, and are not intended to limit the scope of the claims. It will be appreciated that various aspects of the embodiments described herein may be provided as component parts or as subassemblies. It will also be appreciated that the inventions described herein can be modified and adapted in various ways, and all such modifications and adaptations are intended to be included in the scope of this disclosure and the appended claims.

## Claims

1. A cleaning system (400) of a cooling unit (70) of an agricultural vehicle (10), said cleaning system comprising:
a fan (82) configured to deliver air (i) in a forward direction for cooling the cooling unit, and (ii) in a reverse direction for removing debris from the cooling unit, and
***characterized in that*** a controller (402) is configured to activate the fan (82) to deliver air in the reverse direction after (i) a pre-determined time interval has elapsed, and (ii) the agricultural vehicle is being operated in a pre-determined load condition.

2. The cleaning system of claim 1, wherein the pre-determined load condition occurs when (i) a header (18) of the vehicle is in a raised state, (ii) the vehicle is not actively harvesting crop material, (iii) an engine (32) of the vehicle is not operational or is being operated below a pre-determined load level, (iv) the engine is not driving wheels (14/16) of the vehicle, or (v) an engine coolant temperature is below a predetermined value.

3. The cleaning system of any one of the foregoing claims, wherein the cooling unit (70) comprises a housing (72) having an air inlet (84) and an air outlet (86), the fan (82) positioned within the housing, a radiator (80) positioned within the housing, and a perforated screen (78) mounted to the air inlet (84) for limiting debris from entering the cooling unit.

4. The cleaning system of any one of the foregoing claims, wherein, when the fan (82) delivers air in the forward direction, the air is distributed by the fan from the inlet (84) to the outlet (86) of the housing, and when the fan delivers air in the reverse direction, the air is distributed by the fan from the outlet to the inlet of the housing in order to dislodge debris on the radiator (80) and/or the screen (78).

5. The cleaning system of any one of the foregoing claims, wherein the controller (402) is not configured to activate the fan (82) to deliver air in the reverse direction if (i) the pre-determined time interval has elapsed, but (ii) the agricultural vehicle is not being operated in the pre-determined condition.

6. The cleaning system of any one of the foregoing claims, wherein the controller (402) is not configured to activate the fan (82) to deliver air in the reverse direction if (i) the pre-determined time interval has not elapsed, but (ii) the agricultural vehicle is being operated in the pre-determined condition.

7. The cleaning system of any one of the foregoing claims, further comprising a plurality of fans (82), wherein the controller (402) is configured to activate a first fan of the plurality of fans to deliver air in the reverse direction, while, at the same time, the controller is configured to activate a second fan of the plurality of fans to deliver air in the forward direction.

8. The cleaning system of claim 7, wherein the first fan (82) is configured to cool a first fluid circuit of the vehicle, and the second fan (82) is configured to cool a second fluid circuit of the vehicle that is independent from the first circuit.

9. The cleaning system of any one of the foregoing claims, wherein the predetermined load condition occurs when the vehicle is not actively harvesting crop material.

10. The cleaning system of any one of the foregoing claims, wherein the predetermined load condition occurs when an engine (32) of the vehicle is not operational or is being operated below a pre-determined load level.

11. The cleaning system of any one of the foregoing claims, wherein, after the predetermined time interval has elapsed, the controller (402) is then configured to activate the fan (82) to deliver air in the reverse direction after a second predetermined time interval has elapsed regardless of the load condition of the vehicle.

12. The cleaning system of any one of the foregoing claims, wherein the predetermined load condition occurs when a header (18) of the vehicle is in a raised state.

13. An agricultural vehicle (10) comprising the cleaning system (400) of claim 12, wherein the agricultural vehicle comprises the header (18), and the header is configured to be moved between an operational position adjacent a ground surface and a raised position that is positioned further from the ground surface as compared with the operational position.

14. The agricultural vehicle of claim 13, wherein the agricultural vehicle is a windrower.

15. The agricultural vehicle of claim 13, wherein the agricultural vehicle is a combine harvester.
